(19) Europäisches Patentamt
European Patent Office
Office européen des brevets

(11) Veröffentlichungsnummer: **0 000 722**
**B1**

(12) # EUROPÄISCHE PATENTSCHRIFT

(45) Veröffentlichungstag der Patentschrift: **29.09.82**

(51) Int. Cl.³: **C 08 G 18/77,** C 08 G 18/71

(21) Anmeldenummer: **78100484.1**

(22) Anmeldetag: **24.07.78**

(54) **Verfahren zur Herstellung von Arylsulfonsäure Alkylester-Gruppen aufweisenden Polyurethanen.**

(30) Priorität: **03.08.77 DE 2735047**

(43) Veröffentlichungstag der Anmeldung: **21.02.79 Patentblatt 79/4**

(45) Bekanntmachung des Hinweises auf die Patenterteilung: **29.09.82 Patentblatt 82/39**

(84) Benannte Vertragsstaaten: **BE CH DE FR GB NL**

(56) Entgegenhaltungen: **FR-A-2 370 064**

(73) Patentinhaber: **BAYER AG, Zentralbereich Patente, Marken und Lizenzen, D-5090 Leverkusen 1, Bayerwerk (DE)**

(72) Erfinder: **Dieterich, Dieter, Dr., Ludwig-Girtler-Strasse 1, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 000 722 B1

ACTORUM AG

# Verfahren zur Herstellung von Arylsulfonsäure-Alkylester-Gruppen aufweisenden Polyurethanen

Linear aufgebaute Polyurethan-Polysulfonsäureester sind bekannt. Sie können beispielsweise so hergestellt werden, dass man ein Sulfonsäureester-Diol beim Aufbau eines Polyurethans mitverwendet. In den DE-PS 1 156 977 und 1 184 946 wird vorgeschlagen, beispielsweise Polyäther-Diole mit Diisocyanaten und Glycerin-monotosylat umzusetzen, um aus den so erhaltenen Polyurethan-Polysulfonsäureestern anschliessend mit mono- oder difunktionellen tertiären Aminen eine Quaternierungsreaktion durchzuführen und so Polyurethan-Ionomere herzustellen. In diesen Produkten sind seitenständige, aromatische Sulfonsäureester Einheiten an ein aliphatisches Kettensegment gebunden. Bei der Quaternierung wird der aromatische Sulfonsäurerest als Anion abgespalten.

Es ist aus der US-PS 3 826 769 weiterhin bekannt, Polyurethane auf der Grundlage von Polyisocyanat-Sulfonsäuren herzustellen, wobei Polyurethan-Polysulfonsäuren sowie deren Salze erhalten werden. Zu ihrer Herstellung werden entweder monomere Diisocyanate, z.B. Toluylendiisocyanat, mit Schwefeltrioxyd sulfoniert und das erhaltene sulfonierte Diisocyanat anteilig zum Aufbau eines Polyurethans eingesetzt oder es wird in üblicher Weise zunächst ein Präpolymer mit endständigen NCO-Gruppen hergestellt und dieses mit Schwefelsäure sulfoniert unter gleichzeitiger partieller Kettenverlängerung. Die Sulfonsäuregruppen aufweisenden Reaktionsprodukte werden anschliessend mit einer Base neutralisiert und mit Wasser vermischt, wodurch wässrige Polyurethan-Ionomer-Dispersionen entstehen. In dieser Weise durch Sulfonsäuregruppen oder Sulfonatgruppen modifizierte Polyurethane weisen häufig eine beträchtliche Hydrophilie auf, weshalb der Gehalt an Sulfonsäuregruppen im allgemeinen so gering wie möglich zu halten ist. Bei der Herstellung von Dispersionen wird man z.B. nur soviel Sulfonatgruppen einführen, wie zur Erzielung einer ausreichenden Dispergierung und zur Erzielung einer stabilen Dispersion unbedingt erforderlich sind. Ein höherer Gehalt an Sulfonsäuregruppen würde die Wasserbeständigkeit der aus den Dispersionen erhaltenen Beschichtungen beeinträchtigen. Aus diesem Grund wird zur Herstellung von Dispersionen ein Einsatz von nur 0,1–2%, bezogen auf das Polyurethan, an Sulfonierungsmittel empfohlen.

Weiterhin ist die Herstellung hochgefüllter Polyurethane bzw. Polyharnstoffe unter Verwendung von Polyisocyanat-Sulfonsäuren aus der DE-OS-2 359 611 bekannt. Hierbei werden durch die Sulfonsäuregruppen besondere Wechselwirkungen zwischen dem organischen Bindemittel und den verwendeten Füllstoffen erzielt, wodurch hohe Haftkräfte zustande kommen, selbst wenn sehr geringe Mengen an Bindemittel eingesetzt werden. Die Neutralisation der Sulfonsäuregruppen erfolgt bei anorganischen Füllstoffen im allgemeinen unmittelbar an der Teilchenoberfläche. Auch bei diesem Verfahren werden im allgemeinen nur anteilig sulfonierte Polyisocyanate eingesetzt, um die Wasser- und Feuchtigkeitsbeständigkeit der erhaltenen Verbundstoffe nicht zu gefährden.

Die ausschliessliche Verwendung von Polyisocyanaten in Form ihrer Sulfonsäuren wäre vom technischen sowie vom toxikologischen und gewerbehygienischen Standpunkt aus von ganz besonderem Interesse. Einmal sind die Sulfonsäuren aromatischer Isocyanate feste, pulverförmige Substanzen, die keinen Dampfdruck aufweisen und daher besonders sicher zu verarbeiten sind. Zum anderen entstehen beim Abbau dieser Isocyanate und der daraus hergestellten Polyadditionsprodukte wasserlösliche Diaminosulfonsäure, welche nicht zu toxisch sein dürfen. Bei ausschliesslicher Verwendung von Isocyanat-Sulfonsäuren zum Aufbau von Polyadditionsprodukten werden jedoch hoch hydrophile, häufig sogar wasserlösliche Produkte erhalten.

Es besteht daher der Wunsch nach einem Verfahren, welches einerseits den alleinigen Einsatz von Isocyanat-Sulfonsäuren als Isocyanat-Komponente gestattet, andererseits die Herstellung hydrophober wasserbeständiger Polyurethane ermöglicht. Eine Lösung dieses Problems ist Gegenstand der vorliegenden Erfindung. Überraschenderweise wurde nämlich gefunden, dass bei der Umsetzung aromatischer Polyisocyanat-Sulfonsäuren mit Oxiranen oder Oxetanen die erwünschten hydrophoben Polyurethane erhalten werden, unter gleichzeitiger Bildung von Sulfonsäureestergruppen.

Das erfindungsgemässe Verfahren ist vorteilhaft unter mehreren Aspekten:

1. ermöglicht es eine günstige Kombination der Isocyanat-Chemie mit der Epoxyd- bzw. Oxetan-Chemie, wobei die Reaktion zwischen der Isocyanat-Komponente und dem Epoxyd bzw. Oxetan bei Raumtemperatur u. in Abwesenheit von Katalysatoren stattfindet;

2. wird ein neues Reaktionsprinzip vorgeschlagen, nach dem die Isocyanat-Komponente schon mit einem Mono-Epoxyd-bzw. Oxetan, aber auch mit Di- oder Polyepoxyden bzw. Oxetanen in einfacher Weise verlängert und vernetzt werden kann. Die sich dabei abspielende Reaktion ist wahrscheinlich so zu erklären, dass sich in einem 1. Reaktionsschritt die Sulfonsäuregruppe an den Heterocyclus addiert und die dabei gebildete OH-Gruppe im 2. Schritt mit einer Isocyanatgruppe zum Urethan umgesetzt wird;

3. ermöglicht das Verfahren den Aufbau von Polyurethanen unter alleiniger Verwendung von Polyisocyanatsulfonsäuren als Isocyanatkomponente, wobei hydrophobe, nicht wasserempfindliche Produkte erhalten werden;

4. ist das Verfahren unter Einbeziehung der üblichen bei der Urethan-Herstellung verwendeten Komponenten sehr vielseitig variierbar, wodurch sowohl harte Duromere als auch Elastomere aller

Härtebereiche, homogen oder geschäumt, hergestellt werden können;

5. beim Abbau der erfindungsgemässen Polyurethan-Polysulfonsäureester entstehen toxikologisch unbedenkliche Produkte.

Es entstehen nach dem erfindungsgemässen Verfahren Sulfonsäureester-Gruppen aufweisende Polyurethane, welche als Kettenglieder an aromatische Kerne gebundene Sulfonsäurealkylestergruppen aufweisen. Diese Polyurethane enthalten vorzugsweise wiederkehrende Einheiten der allgemeinen Formel

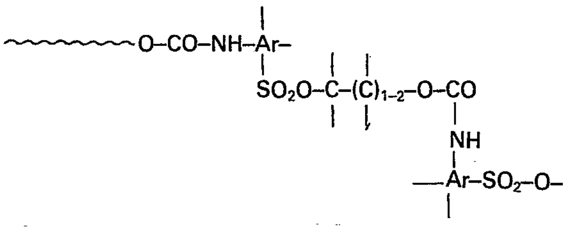

Ar = Rest eines aromatischen Isocyanats, und insbesondere wiederkehrende Einheiten der allgemeinen Formel

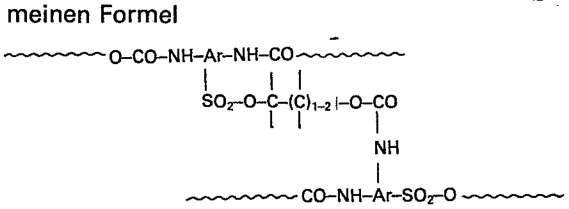

Diese Polyurethane weisen vorzugsweise ein Molekulargewicht von über 12 000 auf.

Gegenstand vorliegender Erfindung ist ein Verfahren zur Herstellung von Arylsulfonsäurealkylestergruppen aufweisenden Polyurethanen, dadurch gekennzeichnet, dass aromatische Isocyanatsulfonsäuren, welche gegebenenfalls Polyether und/oder Polyestereinheiten enthalten, bei 0 bis 190° C mit Oxiranen und/oder Oxetanen bzw. Polyoxiranen und/oder Polyoxetanen umgesetzt werden, wobei das Äquivalentverhältnis der NCO-Gruppen zu den $SO_3H$-Gruppen 0,1:1 bis 1,99:1 und das Äquivalentverhältnis zwischen Epoxid- (bzw. Oxetan-) Gruppen und $SO_3H$-Gruppen 0,2:1 bis 5:1 beträgt, mit der Massgabe, dass bei einem Äquivalentverhältnis zwischen NCO-Gruppen und $SO_3H$-Gruppen oberhalb von 1:1 Zerewitinoff-aktive Verbindungen, vorzugsweise Polyether- und/oder Polyesterpolyole, in einer zum Isocyanatüberschuss mindestens äquivalenten Menge mitverwendet werden. Besonders bevorzugt ist, (in der Polyurethan-Chemie übliche) Polyether- und/oder Polyesterpolyole mit zu verwenden, bzw. solche aromatischen Isocyanatosulfonsäuren einzusetzen, welche schon Polyether und/oder Polyester-Einheiten enthalten. Insbesondere wird ein Verfahren beansprucht, bei dem das Äquivalentverhältnis von NCO-Gruppen zu $SO_3H$-Gruppen 0,2:1 bis 1:1 und das Äquivalentverhältnis von Epoxid-Gruppen zu $SO_3H$-Gruppen 0,5:1 bis 2:1 betragen.

Die Herstellung räumlich vernetzter Polyurethan-Polysulfonsäureester auf der Basis von aromatischen Polyisocyanatosulfonsäuren ist besonders bevorzugt.

Erfindungsgemäss können als Isocyanate die Sulfonierungsprodukte aller bekannten aromatischen Di- und Polyisocyanate bzw. technische Gemische aromatischer Polyisocyanate eingesetzt werden. Polyisocyanate dieser Art werden beispielsweise auf den Seiten 6 und 7 der Europäischen Offenlegungsschrift 0 000 722 bzw. der dort zitierten Literatur beschrieben.

Weiterhin geeignet sind Umsetzungsprodukte der genannten aromatischen Polyisocyanatgemische mit 0,2–50 Mol-% an Polyolen, vorausgesetzt, dass die Viskosität der so erhaltenen Umsetzungsprodukte 50 000 mPa.s bei 25° C nicht überschreitet und der NCO-Gehalt der Umsetzungsprodukte mindestens 6 Gewichtsprozent beträgt. Geeignete Polyole zur Modifizierung der Ausgangsmaterialien sind insbesondere die in der Polyurethan-Chemie bekannten Polyäther- und/oder Polyesterpolyole des Molekulargewichtsbereichs 200 bis 6000, vorzugsweise 300 bis 4000 sowie niedermolekulare Polyole des Molekulargewichtsbereichs 62 bis 200. Beispiele derartiger niedermolekularer Polyole sind Äthylenglykol, Propylenglykol, Glyzerin, Trimethylolpropan, 1, 4, 6-Hexantriol usw.

Vorzugsweise werden vollständig sulfonierte Isocyanate eingesetzt, welche im Molekül ein bis zwei Sulfonsäure-Gruppen tragen. Ganz besonders bevorzugt sind die in Form der Dimeren vorliegenden Mono- und Disulfonsäuren von 4,4'-Diiso-cyanato-diphenylmethan, 2,4'-Diisocyanatodiphenylmethan, 2,4-Diisocyanatotoluol, 2,6-Diisocyanatotoluol, sowie deren Isomerengemische.

Es ist jedoch selbstverständlich auch möglich, nur anteilig sulfonierte Polyisocyanate einzusetzen, insbesondere teilsulfonierte flüssige Gemische von Polyisocyanaten, wie sie z.B. in den DE-OS-2 227 111, 2 359 614 und 2 359 615 beschrieben sind. Besonders bevorzugt sind ganz oder teilweise sulfoniete Phosgenierungsprodukte von Anilin-Formaldehyd-Kondensaten.

Ferner eignen sich auch die Sulfonierungsprodukte aromatischer Monoisocyanate, z.B. von Phenylisocyanat, p-Tolylisocyanat, p-Chlorphenylisocyanat, p-Nitrophenylisocyanat, p-Methoxyphenylisocyanat, m-Chlorphenylisocyanat, m-Chlormethylphenylisocyanat, p-Chlormethylphenylisocyanat.

Da erfindungsgemäss sowohl die Isocyanatgruppe als auch die Sulfonsäuregruppe reagieren, sind solche Monoisocyanatsulfonsäuren als di- bzw. polyfunktionelle Verbindungen anzusehen. Die Sulfonierung der Isocyanate wird in bekannter Weise durchgeführt, vorzugsweise mit Schwefeltrioxyd, Oleum oder Schwefelsäure. Man kann die Sulfonierung in einem getrennten Reaktionsschritt durchführen und die Sulfonsäureisocyanate aus dem Sulfonierungsgemisch isolieren und gegebenenfalls trocknen und sie in dieser Form dem erfindungsgemässen Verfahren zuführen. Es ist jedoch ebensogut möglich die Sulfonierung in situ durchzuführen, was den Vorteil hat, dass die feuchtigkeitsempfindlichen Isocyanatsulfonsäuren nicht isoliert zu werden brauchen.

Die Sulfonierung in situ wird insbesondere dann bevorzugt, wenn Sulfonsäuren von Isocyanatpräpolymeren eingesetzt werden.

Die Sulfonierung kann in bekannter Weise mit Schwefelsäure, Oleum oder Schwefeltrioxyd sowie mit organischen Verbindungen, in denen Schwefeloxyd additiv gebunden ist, unter Ausschluss von Wasser durchgeführt werden. Das Schwefeltrioxyd kann in flüssiger, gelöster oder in gasförmiger, z.B. durch Stickstoff verdünnter Form eingesetzt werden. Als Lösungsmittel eignen sich z.B. Tetrahydrofuran, aliphatische Äther, Dioxan, Dimethylformamid, Dichloräthan, Chlorbenzol, Tetrachloräthan, Dichloräthan, Methylenchlorid, Chloroform, Schwefeldioxyd. Ganz besonders geeignete Lösungsmittel für die Sulfonierungskomponente sind Produkte, die als Weichmacher oder auch als Treibmittel in der Reaktionsmischung bzw. im Fertigprodukt verbleiben können, wie z.B. Fluorchlorkohlenwasserstoffe, Chloräthan, Methylenchlorid, Triäthylphosphat, Tris-chloräthylphosphat, Tris-dibrompropylphosphat (DE-OS-2 650 172).

Pulverförmige Isocyanatsulfonsäuren werden häufig in der Form von mit inerten Suspendiermitteln hergestellten Feuchtpulvern, Pasten oder Suspensionen eingesetzt (DE-OS-2 642 114). Bei der Sulfonierung in situ ist dafür Sorge zu tragen, dass die Sulfonierungsreaktion beendet ist, wenn das Epoxyd eingemischt wird.

Zusätzlich zu den Isocyanatsulfonsäuren können gegebenenfalls bis zu 50 Gew.-%, bezogen auf die Isocyanatkomponente in der Polyurethan-Chemie üblichen Polyisocyanate mitverwendet werden, wie z.B. die oben als Ausgangsmaterial für die Sulfonierung bereits erwähnten Polyisocyanate, ferner aliphatische Polyisocyanate, wie Äthylendiisocyanat, 1,4-Tetramethylendiisocyanat, 1,6-Hexamethylendiisocyanat, 1,12-Dodecan-diisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-AS-1 202 785, US-PS-3 401 190), 2,4- und 2,6-Hexanhydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat sowie deren Derivate, z.B. Urethane, Biurete, wie sie in oben genannter Aufzählung unter den aromatischen Polyisocyanaten erwähnt sind.

Erfindungsgemäss gegebenenfalls mitzuverwendende Komponente sind ferner Verbindungen mit mindestens zwei gegenüber Isocyanaten reaktionsfähigen Wasserstoffatomen von einem Molekulargewicht in der Regel von 400–10 000. Hierunter versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800 bis 10 000, vorzugsweise 1000 bis 6000, z.B. mindestens zwei, in der Regel 2 bis 8, vorzugsweise aber 2 bis 4, Hydroxylgruppen aufweisende Polyester, Polyäther, Polythioläther, Polyacetale, Polycarbonate, Polyesteramine, wie sie für die Herstellung von homogenen und von zellförmigen Polyurethanen an sich bekannt sind.

Selbstverständlich können Mischungen der obengenannten Verbindungen mit mindestens zwei gegenüber Isocyanaten reaktionsfähigen Wasserstoffatomen mit einem Molekulargewicht von 400–10 000, z.B. Mischungen von Polyäthern und Polyestern, eingesetzt werden.

Gegebenenfalls können erfindungsgemäss auch Verbindungen mit mindestens 2 gegenüber Isocyanaten reaktionsfähigen Wasserstoffatomen und einem Molekulargewicht zwischen 32 und 400 bzw. Mischungen derartiger Verbindungen eingesetzt werden.

Beispiele für alle diese erfindungsgemäss gegebenenfalls zu verwendenden Komponenten sind der Europäischen Offenlegungsschrift 0 000 722 auf den Seiten 11 bis 15 bzw. der dort zitierten Literatur zu entnehmen.

Als Oxirane und Oxetane kommen erfindungsgemäss beispielsweise in Frage: aliphatische, cycloaliphatische, aromatische oder heterocyclische Mono-, Di- und Polyepoxyde, ferner Epoxyde, welche Hydroxy-gruppen enthalten. Als Monoepoxyde seien z.B. genannt:

Äthylenoxyd, Propylenoxyd, Buten-1,2-oxyd, Buten-2,3-oxyd, 1,4-Dichlor-buten-2,3-oxyd, Styroloxyd, 1,1,1-Trichloropropen-2,3-oxyd, 1,1,1-Trichlorbuten-3,4-oxyd, 1,4-Dibrombuten-2,3-oxyd, Epichlorhydrin, Epibromhydrin, Glycid, Glycerinmono-glycidyläther, Isobutenoxid, p-Glycidylstyrol, N-Glycidylcarbazol, Cyanäthylglycidyläther, Trichloräthylglycidyläther, Chloräthylglycidyläther, Bromäthylglycidyläther, Vinyloxiran, 3,4-Dichlorbuten-1,2-oxid, 2-(1-Chlorvinyl)-oxiran, 2-Chlor-2-vinyl-oxiran, 2,3-Epipropylphosphonsäurediäthylester, 3,4-Bis-hydroxy-buten-1,2-oxid, 2-Methyl-2-vinyl-oxiran, 2-(1-Methylvinyl-)oxiran.

Ferner eignen sich die Produkte der Epoxydierung von natürlichen Fetten und Ölen, wie Sojaöl, Olivenöl, Leinöl, Tran sowie von synthetischen Di- oder Polyestern, welche ungesättigte Fettsäuren, wie Ölsäure, Linolsäure, Linolensäure, Ricinolsäure, Erucasäure enthalten.

Gut geeignet sind auch Ester von Glycid mit Monocarbonsäuren, z.B. Glycidyl-acetat, Glycidylchloracetat, Glycidyl-dichloracetat, Glycidyltrichloracetat, Glycidyl-bromacetat, Glycidyl-acrylat, Glycidylmethacrylat, Glycidyl-caproat, Glycidyloctoat, Glycidyl-dodecanoat, Glycidyl-oleat, Glycidyl-stearat, sowie Äther des Glycids, z.B. mit Phenol und substituierten, insbesondere halogenierten Phenolen.

Ebenfalls gut geeignet sind die Umsetzungsprodukte von Hydroxy-oxiranen, insbesondere von Glycid mit aliphatischen, cycloaliphatischen und aromatischen Mono- und Polyisocyanaten.

Zur Erhöhung der Vernetzungsdichte können auch Di- und Poly-epoxide eingesetzt werden, entweder allein oder in Kombination mit den oben aufgeführten Monoepoxiden.

Solche di- und polyfunktionellen Epoxide sind z.B. die Epoxidationsprodukte von aliphatischen

und cycloaliphatischen Diolefinen, wie Diepoxibutan, Diepoxihexan, Vinyl-cyclohexendioxid, Dicyclopentadiendioxid, Limonendioxyd, Dicyclopentadiendioxyd, Äthylenglykol-bis-(3,4-epoxytetrahydro-dicyclopentadien-8-yl)-äther, (3,4-Epoxytetrahydrodicyclopentadien-8-yl)-glycidyläther, epoxidierte Polybutadiene oder Mischpolymerisate von Butadien mit äthylenisch ungesättigten Verbindungen, wie Styrol oder Vinylacetat, Verbindungen mit zwei Epoxicyclohexylresten, wie Diäthylenglykol-bis-(3,3-epoxycyclohexan - carboxylat), Bis-3,4-(epoxycyclohexylmethyl)-succinat, 3,4-Epoxi-6-methylcyclohexyl-methyl - 3', 4'-epoxi-6'-methyl-cyclohexan-carboxylat und 3,4-Epoxihexahydrobenzal-3', 4'- epoxycyclohexan-1',1'-dimethanol.

Weitere erfindungsgemäss einzusetzende Materialien sind Polyglycidylester, wie diejenigen, die man durch Umsetzen einer Dicarbonsäure oder durch Umsetzen von Cyanursäure mit Epichlorhydrin oder Dichlorhydrin in Gegenwart eines Alkalis erhält. Derartige Polyester können sich von aliphatischen Dicarbonsäuren, wie Bernsteinsäure oder Adipinsäure und insbesondere von aromatischen Dicarbonsäuren, wie Phthalsäure oder Terephthalsäure, ableiten. Diglycidyladipat, Diglycidylphthalat und Triglycidylisocyanurat können in diesem Zusammenhang erwähnt werden.

Polyglycidyläther, wie diejenigen, die man durch Veräthern eines zweiwertigen oder mehrwertigen Alkohols, eines Diphenols oder eines Polyphenols mit Epichlorhydrin oder Dichlorhydrin in Gegenwart eines Alkalis erhält, werden vorzugsweise eingesetzt. Diese Verbindungen können sich von Glykolen, wie Äthylenglykol, Diäthylenglykol, Triäthylenglykol, 1,3-Propylenglykol, 1,4-Butandiol, 1,5-Pentandiol, 1,6-Hexandiol, 2,4,6-Hexantriol, Glycerin und insbesondere von Diphenolen oder Polyphenolen, wie Resercin, Brenzkatechin, Hydrochinon, Phenolphthalein, Phenolformaldehyd-Kondensationsprodukten der Art der Novolake, 1,4-Di-hydroxynaphthalin, Dihydroxy-1,5-naphthalin, Bis-(hydroxy-4-phenyl)methan, Tetrahydroxyphenyl-1,1,2,2-äthan, Bis(hydroxy-4-phenyl)methylphenylmethan, die Bis-(hydroxy-4-phenyl)tolylmethane, Dihydroxy-4,4'-diphenyl, Bis-(hydroxy-4-phenyl)sulfon und insbesondere Bis(hydroxy-4-phenyl)2,2-propan oder die Kondensationprodukte eines Phenols mit einem Aldehyd oder einem Keton. In letzterem Fall handelt es sich um Epoxyharze mit zwei oder mehreren Epoxygruppen und ggf. mit freien Hydroxylgruppen. Unter ihnen eignen sich insbesondere die Epoxyharze, die aus Polyphenolen hergestellt wurden und unter der Handelsbezeichnung NOVOLAK-Harze vertrieben werden, die Polykondensationsprodukte eines Phenols mit Formol sind. Die erhaltenen Epoxyharze werden durch die folgende Formel wiedergegeben:

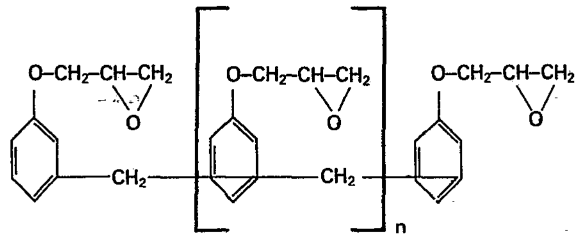

Ferner sind geeignet Polyglycidyläther von Diphenolen, die durch Veresterung von 2 Mol des Natriumsalzes einer aromatischen Oxycarbonsäure mit einem Mol eines Dihalogenalkans oder Dihalogendialkyläthers erhalten wurden (vgl. GB-PS-1 017 612), aus Polyphenolen, die durch Kondensation von Phenolen und langkettigen, mindestens 2 Halogenatome enthaltenden Halogenparaffinen erhalten wurden (vgl. GB-PS-1 024 288). Weiterhin seien genannt: Polyepoxidverbindungen auf der Basis von aromatischen Aminen und Epichlorhydrin, z.B. N-Di(2,3-epoxypropyl)-anilin, N,N'-Dimethyl-N,N'-diepoxypropyl-4,4'-diamino-diphenylmethan, N,N'-Tetra-epoxypropyl-4,4'-diaminodiphenylmethan, N-Diepoxypropyl-4-aminophenylglycidäther (vgl. die GB-PS-772 830 und 816 923). Ausserdem kommen infrage: Glycidylester mehrwertiger aromatischer und cycloaliphatischer Carbonsäuren, beispielsweise Phthalsäurediglycidyl mit mehr als 5,5 Epoxidäquivalenten pro kg und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n-Hydroxylgruppen oder Hexahydrophthalsäurediglycidylester, die gegebenenfalls durch Methylgruppen substituiert sein können.

Weiterhin seien aufgeführt Glycidylverbindungen auf der Basis anorganischer Säuren, wie z.B. Triglycidylphosphat, Glycidyläther von Hydroxyphenylphosphorsäureester, Diglycidylcarbonat, Tetraglycidyltitanat, ferner Epoxialkylphosphinoxide (DE-AS-1 943 712).

Geeignet sind auch cycloaliphatische Epoxidverbindungen. Z.B. können die Verbindungen der folgenden Formeln erwähnt werden:

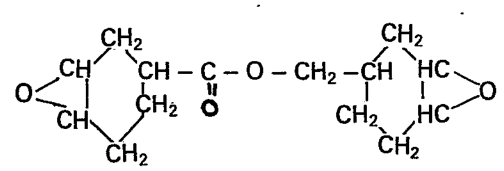

(= 3,4-Epoxicyclohexylmethyl-3',4'-epoxicy clohexancarboxylat)

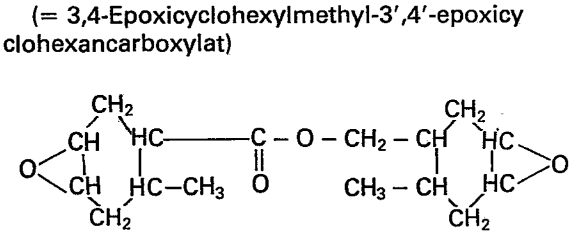

(= 3,4-Epoxi-6-methylcyclohexylmethyl-3',4'-epoxi-6'-methyl-cyclohexancarboxylat) und

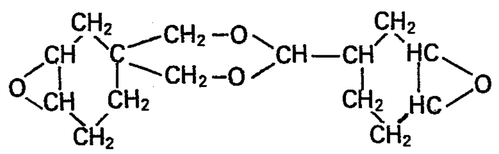

(= 3,4-Epoxihexahydrobenzal-3',4'-epoxicyclohexan-1',1'-dimethanol.

Besonders geeignete heterocyclische Epoxidverbindungen sind das Triglycidylisocyanurat der folgenden Formel

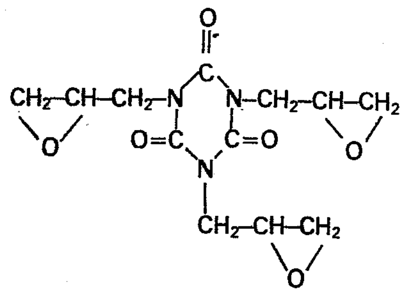

als auch das N,N'-Diglycidyl-dimethylhydantoin der folgenden Formel

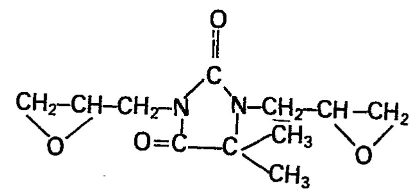

Es ist ferner möglich, Mischungen derartiger cycloaliphatischer und/oder heterocyclischer Epoxidverbindungen zu verwenden.

Andere bevorzugte Verbindungen sind die Polyglycidyläther von Bis-(p-hydroxyphenyl)-dimethylmethan (Bis-phenol A), die der folgenden Durchschnittsformel entsprechen:

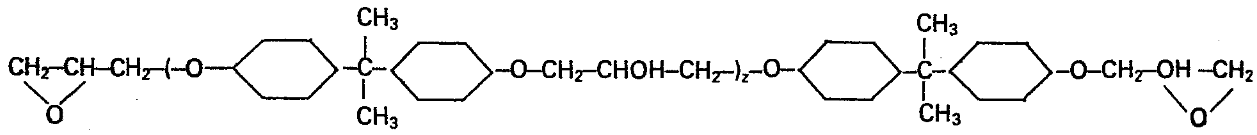

worin z eine ganze oder gebrochene kleine Zahl im Bereich von 0 bis 2 bedeutet.

Weitere geeignete Diepoxide sind beispielsweise: Glycerin-diglycidyläther, Diglycidyl-N,N'-äthylenharnstoff, Diglycidyl-N,N'-propylenharnstoff, N,N'-Diglycidylharnstoff, N,N'-Diglycidyl-dimethylharnstoff, sowie Oligomere dieser Verbindungen. Di-, Tri- oder Tetraglycidyl-acetylen-diharnstoff, sowie Oligomere dieser Verbindungen. Weitere Epoxide, die erfindungsgemäss eingesetzt werden, können zum Beispiel Houben-Weyl, herausgegeben von Eugen Müller, 1963 Band XIV/2, Seiten 462–538 entnommen werden.

Beispiele geeigneter Monooxetane sind: Trimethylenoxid, 3,3-Dimethyloxetan, 3,3-Diäthyloxetan, 3,3-Dipropyloxetan, 3,3-Dibutyl-oxetan, 3-Methyl-3-dodecyl-oxetan, 3-Äthyl-3-stearyl-oxetan, 3,3-Tetramethylen-oxetan, 3,3-Pentamethylen-oxetan, 2,6-Dioxaspiro(3,3)-heptan, 3-Methyl-3-phenoxymethyl-oxetan, 3-Äthyl-3-phenoxymethyl-oxetan, 3-Methyl-3-chlor-methyl-oxetan, 3-Äthyl-3-chlormethyl-oxetan, 3-Butyl-3-chlormethyl-oxetan, 3-Dodecyl-3-chlormethyl-oxetan, 3-Stearyl-3-chlormethyl-oxetan, 3-Methyl-3-brommethyl-oxetan, 3-Äthyl-3-brommethyl-oxetan, 3-Propyl-3-brommethyl-oxetan, 3-Dodecyl-3-brommethyl-oxetan, 3,3-Bis-chlormethyl-oxetan, 3,3-Bis-brommethyl-oxetan, 3-Methyl-3-hydroxymethl-oxetan, 3-Äthyl-3-hydroxymethyl-oxetan, 3-Amyl-3-hydroxymethyl-oxetan, 3,3-Bis-hydroxymethyl-oxetan, sowie Äther, Ester, Urethane dieser Hydroxy-oxetane, wie z.B. 3-Äthyl-3-methoxymethyl-oxetan, 3-Äthyl-3-butoxymethyl-oxetan, 3-Äthyl-3-dodecyloxymethyl-oxetan, 3-Äthyl-3-acetoxymethyl-oxetan, 3-Äthyl-3-stearoyloxymethyl-oxetan, 3-Äthyl-3-N-methyl-carbamoylmethyl-oxetan, 3-Äthyl-3-N-chloräthyl-carbomoylmethyl-oxetan, 3-Äthyl-3-N-phenylcarbomoylmethyl-oxetan, 3-Äthyl-3-N-dichlorphenylcarbamoylmethyl-oxetan, 3-Äthyl-3-N-stearylcarbamoylmethyl-oxetan, 3,3-Bis-phenoxymethyl-oxetan, 3,3-Bis-(4-chlorphenoxymethyl)-oxetan, 3,3-Bis-(2,4-dichlorphenoxymethyl)-oxetan, 3,3-Bis-carbamoylmethyl-oxetan, 3-Phenoxymethyl-3-carbamoylmethyl-oxetan. Weitere geeignete Oxetane können beispielsweise der Deutschen Auslegeschrift 1 668 900, Kolonne 3 und 4 entnommen werden.

Selbstverständlich können auch die Oxetan-Analogen der weiter oben aufgeführten Glycid-Derivate eingesetzt werden, z.B. 3-Äthyl-3-acryloxy-oxetan, 3-Äthyl-3-methacryloxy-oxetan, 3-Methyl-3-trichloracetoxy-oxetan, 3-Methyl-3-β-cyanäthoxymethyl-oxetan, 3-Äthyl-β-cyanäthoxymethyl-oxetan, 3-Äthyl-3-phenoxymethyl-oxetan.

Unter den erfindungsgemäss einsetzbaren Di- und Polyoxetanen sind von besonderer Bedeutung die Umsetzungsprodukte von 3-Alkyl-3-hydroxymethyl-oxetanen mit Di- und Polycarbonsäuren, sowie mit Di- und Polyisocyanaten. Auch die sich von aliphatischen, cycloaliphatischen und aromatischen Diolen und Polyolen ableitenden Di- und Polyäther der Hydroxy-oxetane sind sehr gut geeignet, ferner Bis-oxetanylester (DE-AS 1 907 117), ebenso Phosphorsäureester und Phosphorigsäureester, wie Tris-(3-methyloxetanylmethyl)-phosphit, Tris-(3-äthyl-oxetanyl-methyl)-phosphit, Tris-(3-äthyl-oxetanylmethyl)-phosphat.

Ganz besonders bevorzugt sind hydrophobe, wasserunlösliche, sowie flüssige Mono- und Polyepoxide, wie z.B. Polyglycidyläther mehrwertiger Phenole, insbesondere aus Bisphenol A; Polyepoxidverbindungen auf der Basis von aromatischen Aminen, insbesondere Bis(N-epoxypropyl)-anilin, N,N'-Dimethyl-N,N'-diepoxypropyl-4,4'-diamino-di-phenylmethan und N-Diepoxypropyl-4-amino-

phenylglycidyläther; Polyglycidylester aus aromatischen oder cycloaliphatischen Dicarbonsäuren, insbesondere Hexahydrophthalsäurediglycidylester bzw. Phthalsäurediglycidylester mit mehr als 5,5 Epoxidäquivalenten/kg sowie Phosphorsäuretriglycidylester, 3-Äthyl-3-hydroxymethyl-oxetan und dessen Ester, Äther und Urethane, Glycid, Epichlorhydrin, Trichlorbutenoxid. Diese Produkte lassen sich im Rahmen der Polyurethan-technologie besonders einfach verarbeitet und liefern Polyurethan-polysulfonsäureester besonders guter Wasser- und Feuchtigkeitsbeständigkeit.

Bei der Durchführung der Reaktion zwischen Isocyanatosulfonsäure und Oxiran bzw. Oxetan sind in der Regel keine Katalysatoren erforderlich, da die Anlagerung der Sulfonsäuregruppe an den Oxiranring bzw. Oxetanring auch bei Raumtemperatur in der Regel mit hinreichender Schnelligkeit erfolgt. Es kann jedoch zweckmässig sein, die Addition der dabei entstehenden Hydroxygruppen mit der Isocyanatgruppe zu katalysieren. Hierzu können die üblichen in der Polyurethanchemie gängigen Katalysatoren verwendet werden, z.B. solchen, wie sie auf Seite 24 der europäischen Offenlegungsschrift 0 000 722 bzw. der dort zitierten Literatur beschrieben werden.

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-% bezogen auf die Komponente a), eingesetzt.

Besonders bevorzugt werden tert. Amine geringer Alkylierbarkeit, sowie metallorganische Verbindungen. Es sollte in jedem Fall dafür Sorge getragen werden, dass die Katalysatoren nicht durch die Sulfonsäureestergruppen zu früh alkyliert und dadurch unwirksam werden. Andererseits kann eine solche «Vernichtung» des Katalysators am Ende der Reaktion durchaus erwünscht sein und trägt zur Stabilität des Reaktionsprodukts bei. Selbstverständlich können neben Di- bzw. Polyepoxiden auch unterschüssige Mengen üblicher Epoxihärter mitverwendet werden, beispielsweise Amine, die mindestens 2 Wasserstoffatome, die direkt an den Stickstoff gebunden sind, enthalten, beispielsweise aliphatische und aromatische, primäre und sekundäre Amine wie Mono- und Dibutylamin, p-Phenylendiamin, Bis-(p-aminophenyl)-methan, Äthylendiamin, N,N-Diäthyläthylendiamin, Diäthylentriamin, Tetra-(hydroxyäthyl)-diäthylentriamin, Triäthylentetramin, Tetraäthylenpentamin, Piperidin, Guanidin und Guanidinderivate wie Phenylguanidin und Diphenylguanidin, Dicyandiamid, Anilinformaldehydharze, Polymere von Aminostyrolen und Polyaminoamiden, beispielsweise jene, die aus aliphatischen Polyaminen und dimerisierten oder trimerisierten ungesättigten Fettsäuren hergestellt werden, mehrwertige Phenole, beispielsweise Resorcin, Hydrochinon, 2,2-Bis-(4-hydroxyphenyl)-propan, Phenyl-Aldehydharze und ölmodifizierte Phenol-Aldehydharze, Reaktions-produkte von Aluminiumalkoholaten oder -phenolaten mit tautomer reagierenden Verbindungen der Acetoessigsäureesterart, Friedel-Crafts-Katalysatoren, beispielsweise $AlCl_3$, $SnCl_4$, $ZnCl_2$, $BF_3$ und deren Komplexe mit organischen Verbindungen, Phosphorsäure und Polycarbonsäuren und deren Anhydride, beispielsweise Phthalsäureanhydrid, Tetrahydrophthalsäureanhydrid, Dodecenylbernsteinsäureanhydrid, Hexahydrophthalsäureanhydrid, Hexachlorendomethylentetrahydrophthalsäureanhydride oder Endeomethylentetrahydrophthalsäureanhydride oder deren Mischungen oder Maleinsäure- oder Bernsteinsäureanhydride.

Erfindungsgemäss können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyäthersiloxane infrage. Diese Verbindungen sind im allgemeinen so aufgebaut, dass ein Copolymerisat aus Äthylenoxid und Propylenoxid mit einem Polydimethylsiloxanrest verbunden ist. Derartige Schaumstabilisatoren sind z.B. in der US-PS-2 764 565 beschrieben. Diese Zusatzstoffe werden bevorzugt zu 0,02 Gew.-%, bezogen auf das Reaktionsgemisch, eingesetzt.

Die praktische Durchführung des Verfahrens auf der Basis der genannten Ausgangsstoffe ist denkbar einfach und unterscheidet sich nicht von den in der Polyurethan-Chemie üblichen und dem Fachmann bekannten Verfahrensweisen. Das Epoxyd bzw. Oxetan ist im Hinblick auf die praktische Verfahrensdurchführung sozusagen als Polyolkomponente anzusehen, da es als Monoepoxyd bifunktionell gegenüber einer Isocyanatsulfonsäure reagiert.

Im einfachsten Fall wird die Isocyanatsulfonsäure mit dem Epoxyd bzw. Oxetan gemischt, worauf bereits bei Raumtemperatur die Polyaddition stattfindet und ein Polymer gebildet wird. Diese Arbeitsweise kommt insbesondere dann in Betracht, wenn ansulfonierte flüssige Polyisocyanate oder flüssige NCO-Präpolymere eingesetzt werden. Zur Herstellung von Schaumstoffen werden dem Reaktionsgemisch zusätzlich Katalysatoren und Treibmittel zugesetzt, wobei auch Wasser zur Ingangsetzung der Schaumbildungsreaktion mit eingesetzt werden kann.

Werden feste, pulverförmige Isocyanatsulfonsäuren eingesetzt, so muss sichergestellt sein, dass das Reaktionsgemisch während der Reaktion homogen wird, d.h., dass die Isocyanatosulfonsäure sich während der Reaktion auflöst. Ist dies nicht der Fall, so muss in Gegenwart von Wasser

oder polaren Lösungsmitteln oder auch bei erhöhter Temperatur gearbeitet werden. In einer bevorzugten Ausführungsform des Verfahrens wird die Isocyanatsulfonsäure zunächst mit einem Polyol, insbesondere einer der in der PU-Chemie üblichen Polyäther- oder Polyester-Komponenten unter Rühren und gegebenenfalls äusserer Wärmezufuhr zu einem ganz oder weitgehend homogenen NCO-Gruppen aufweisenden Präpolymeren umgesetzt und erst dann das Epoxyd bzw. Oxetan zugegeben.

Nach einer anderen, ebenfalls bevorzugten Arbeitsweise wird die feste Polyisocyanatsulfonsäure, welche in üblichen Polyisocyanaten dispergiert sein kann, mit dem Gemisch aus Polyhydroxyverbindungen und Epoxid bzw. Oxetan zu einer Dispersion vermischt. Sobald die Reaktion in Gang kommt, geht die Sulfonsäure in Lösung.

Die Mengenverhältnisse zwischen den Reaktionskomponenten können innerhalb weiter Grenzen variiert werden, wobei jedoch stets zu berücksichtigen ist, dass als Reaktionsprodukt ein hochmolekulares Polyurethan entstehen soll, welches im wesentlichen frei von NCO-Gruppen ist. Zur Berechnung der erfindungsrelevanten NCO-Gruppen-Äquivalente sind zunächst von den in Form der Isocyanate eingesetzten NCO-Gruppen-Äquivalenten die Äquivalente aller zerewitinoff-aktiven Koreaktanten abzuziehen, einschliesslich der OH-Gruppen, die gegebenenfalls durch Hydroxyoxirane bzw. Hydroxyoxetane in die Reaktion eingebracht werden. Wesentlich ist also der Gehalt an NCO-Gruppen des formal aus der Summe aller Isocyanate und der Summe aller Zerewitinoff-aktiven Ko-reaktanten (meist Polyole) entstandenen Präpolymeren, unabhängig davon, ob ein solches Präpolymer tatsächlich in einem ersten Reaktionsschritt ganz oder teilweise gebildet wird, oder ob die Reaktion mit der Epoxid-Komponente im one-shot-Verfahren durchgeführt wird.

Das Äquivalent-Verhältnis der so berechneten NCO-Gruppen zu den $SO_3H$-Gruppen soll zwischen 0,1 und 1,99 liegen. Vorzugsweise beträgt dieses Verhältnis jedoch 0,2–1. Der untere Bereich (unterhalb 0,8) ist realisiert, wenn praktisch ausschliesslich Isocyanatsulfonsäuren eingesetzt werden und ausserdem Polyhydroxyverbindungen mitverwendet werden. Der obere Bereich (oberhalb 0,8) ist realisiert, entweder wenn in Abwesenheit zusätzlicher Polyole oder anderer zerewitinoff-aktiver Verbindungen gearbeitet wird, oder wenn übliche nichtsulfonierte Isocyanate zu einem grösseren Anteil miteingesetzt werden und eine ungefähr äquivalente Menge an Polyolen mitverwendet wird. Liegt das $NCO/SO_3H$-Verhältnis über 1, so ist die Mitverwendung von zerewitinoff-aktiven Verbindungen in der Rezeptur obligatorisch, und zwar in dem Masse, wie das Verhältnis 1 überschreitet. Ein Verhältnis von 1,8 erfordert also mindestens 0,8 Äquivalente an Polyol oder dergleichen.

Zur Berechnung der erfindungsrelevanten Epoxi-Gruppen-Äquivalente sind in analoger Weise zunächst die Äquivalente etwaiger mitverwendeter Epoxid-Härter abzuziehen. Primäre und sekundäre Amine reagieren im Regelfall mit der Isocyanatgruppe schneller als mit der Epoxigruppe, sie sind daher nur dann als Epoxihärter zu rechnen, wenn sie entweder von vornherein separat der Epoxidkomponente zur Modifizierung zugesetzt werden, oder wenn sie nach erfolgter Reaktion der NCO-Gruppen dem Reaktionsansatz zum Schluss zugefügt werden.

Das Äquivalentverhältnis Epoxigruppen zu $SO_3H$-Gruppen soll 0,2–5, vorzugsweise 0,5–2 betragen. Dies bedeutet, dass im Extremfall nur 20% der insgesamt vorliegenden Sulfonsäuregruppen verestert werden, beispielsweise wenn ein ionisches, Sulfonatgruppen tragendes Produkt gewünscht wird und die Reaktion mit dem Epoxid nur einer Teilhydrophobierung oder der Erhöhung des Verzweigungsgrades dienen soll. Andererseits kann selbstverständlich die Epoxikomponente im Überschuss eingesetzt werden, beispielsweise um eine quantitative Veresterung zu gewährleisten, um freie Epoxigruppen in das Polymer einzuführen (z.B. zur Erzielung optimaler Haftung bei Beschichtungsmaterialien oder auch um freie Epoxide als Weichmacher oder Haftvermittler im Polymeren zu haben). Schliesslich kann es auch erwünscht sein, eine Reaktion freier Epoxidgruppen mit freien Isocyanatgruppen oder eine Trimerisierung im Anschluss an die erfindungsgemässe Untersetzung als Hitzehärtungsschritt zur Endvernetzung durchzuführen. Vorzugsweise wird man bei einem $NCO/SO_3H$-Verhältnis über 1 auch ein $Epoxid/SO_3H$-Verhältnis über 1 wählen.

Die Reaktion kann in An- oder Abwesenheit von Lösungsmitteln durchgeführt werden. Wenn die Anwesenheit von Lösungsmitteln nicht stört, so ist es zweckmässig, zunächst die Isocyanat- und die Polyolkomponenten zu einem höhermolekularen Präpolymeren umzusetzen, welches z.B. ein Durchschnittsmolekulargewicht von 5000 bis 20 000 aufweist und in einem oder mehreren Lösungsmitteln gelöst werden kann. Zur Herstellung einer Beschichtung wird dann die Epoxikomponente, die ebenfalls in einem Lösungsmittel gelöst sein kann, mit der Lösung des Präpolymeren vereint, die Lösung aufgetragen und das Lösungsmittel durch Verdampfen entfernt. Gleichzeitig bzw. anschliessend erfolgt die Umsetzung gemäss Erfindung auf dem Substrat. Geeignete Lösungsmittel sind z.B. Ketone, Ester, Halogenkohlenwasserstoffe, ggf. in Mischung mit Kohlenwasserstoffen, Dimethylformamid. Vorzugsweise wird die Reaktion in Abwesenheit üblicher Lösungsmittel durchgeführt oder in Anwesenheit sehr geringer Mengen apolarer Lösungsmittel, mit denen die Isocyanatsulfonsäure stabilisiert ist oder in Anwesenheit flüssiger Weichmacher. Das Verfahren eignet sich besonders für die Technologien des Giessens, Reaktions-Spritzgiessens (RIM-Technologie), sowie für die Herstellung von Schaumstoffen.

Für die Herstellung von Schaumstoffen bzw. mikrozellularen Werkstoffen und Formteilen sind verschiedene Ausführungsformen des erfindungsgemässen Verfahrens von besonderer Bedeutung: Es können beispielsweise teilsulfonierte

flüssige Polyisocyanate eingesetzt werden, wie z.B. sulfonierte Phosgenierungsprodukte der Anilin-Formaldehyd-Kondensation. Das Polyisocyanat ist dann homogen flüssig und kann wie üblich verarbeitet werden.

Es können auch Dispersionen fester sulfonierter Polyisocyanate in nicht sulfonierten flüssigen Polyisocyanaten eingesetzt werden, wie sie beispielsweise bei der partiellen Sulfonierung von Toluylen-diisocyanat anfallen. Sind solche Dispersionen sedimentationsstabil, z.B. nach Zerkleinerung der dispergierten Phase in einem Mahlgerät, so können sie wie flüssige Polyisocyanate gehandhabt werden. Nicht sedimentationsstabile Dispersionen können z.B. unmittelbar vor der Verschäumung durch Zusatz eines Epoxids oder Oxetans unter Reaktion in Lösung gebracht und dann mit der Polyhydroxy-Komponente verschäumt werden. Man kann aber auch im one-shot-Verfahren die Dispersion unmittelbar mit Polyol und Epoxid, bzw. Oxetan sowie den üblichen Zusatzkomponenten unter Verschäumung zur Reaktion bringen.

Sofern als Polyisocyanatkomponente ausschliesslich Polyisocyanatsulfonsäuren eingesetzt werden, können diese beispielsweise wie Füllstoffe trocken dem Reaktionsgemisch zugegeben werden. Günstiger ist es, das feste Polyisocyanat mit der flüssigen Polyol-Komponente anzupasten und dann mit Treibmittel und Epoxid zur Reaktion zu bringen. Man kann auch das Polyisocyanat in der Epoxidkomponente unter Reaktion lösen und dann mit den übrigen Komponenten mischen.

Gegenüber anderen, bekannten Reaktionen zwischen Polyisocyanaten und Polyepoxiden ist besonders hervorzuheben, dass die erfindungsgemässe Umsetzung bereits bei 0–30° C, insbesondere bei Raumtemperatur vor sich geht. Eine Erwärmung des Reaktionsgemisches führt zu starker Beschleunigung der Reaktion und ist daher nur erforderlich, falls eine entsprechend rasche Umsetzung gewünscht wird. Selbstverständlich ist es möglich, jedoch keinesfalls notwendig, bei Temperaturen oberhalb 80° C bis zu etwa 190° C zu arbeiten. Der bevorzugte Temperaturbereich liegt bei 20–60° C, wobei die Temperatur während der Reaktion um etwa 10–80° C ansteigt.

Als Reaktionspartner für feste sulfonierte Polyisocyanate sind ganz besonders polare Hydroxy-Verbindungen, wie Polyäther und Polyester, welche Oxyäthylen-Einheiten enthalten, geeignet. Besonders geeignete Oxirane bzw. Oxetane sind solche, welche zusätzlich freie Hydroxy-Gruppen enthalten, wie Glycid und 3-Alkyl-3-hydroxymethyl-oxetan. Eine ganz besonders bevorzugte Ausführungsform des erfindungsgemässen Verfahrens besteht darin, ein monosulfoniertes Diisocyanat, wie sulfoniertes Toluylendiisocyanat oder sulfoniertes Diisocyanato-diphenylmethan mit ungefähr der äquivalenten Menge Glycid oder 3-Äthyl-3-hydroxymethyl-oxetan umzusetzen und für zusätzlich eingesetzte Polyhydroxyverbindungen eine etwa äquivalente Menge an üblichen Polyisocyanaten zuzugeben.

Wegen der guten Haftung der erfindungsgemässen Polymeren auf Oberflächen der verschiedensten Art, insbesondere polaren Oberflächen, ist die Mitverwendung von anorganischen Füllstoffen häufig vorteilhaft. Bevorzugte Füllstoffe sind Kreide, Talkum, Dolomit, Gips, Ton, Anhydrit, Quarzmehl, Aluminium-oxidhydrat, Calcium-Aluminium-silikate, Zement, Glas in Form von Faser, Pulver oder Kügelchen. Weitere Füllstoffe anorganischer und organischer Art können z.B. der DE-OS-2 359 609 entnommen werden.

Zur Herstellung von Schaumstoffen werden die üblichen Treibmittel mitverwendet wie Kohlenwasserstoffe, Halogenkohlenwasserstoffe. Es kann aber auch mittels Kohlendioxid (z.B. durch Mitverwendung von Wasser zur Rezeptur) oder mittels gelöster Gase, z.B. Pressluft geschäumt werden.

Die Verfahrensprodukte finden Verwendung in den üblichen, für kompakte oder zellige Elastomere, Weichschäume, Halbhartschäume und Hartschäume bekannten Anwendungsgebieten, insbesondere dann, wenn hohe Anforderungen an die Vernetzungsdichte, das Brandverhalten oder die Abbaubarkeit gestellt werden. So eignen sich die nach dem Verfahren der Erfindung erhältlichen Produkte beispielsweise zur Herstellung von Polstermaterialien, Matratzen, elastischen Unterlagen, Autositzen, Dämpfungsmaterialien, Stossabsorbern, Konstruktionswerkstoffen, schalldämmenden Isolierungen, feuchtigkeitsaufnehmenden Materialien, z.B. im Hygienesektor, als Substrate zur Pflanzenaufzucht sowie für den Wärme- und Kälteschutz.

Beispiele:

A) Herstellung von Präpolymeren mit endständigen NCO-Gruppen

I: 700g (0,35 Mol) eines auf Propylenglykol (1,2) gestarteten Polypropylenätherglykols der OH-Zahl 56 werden mit 150g (0,455 Mol) toluolfeuchtem Uretdion der Diisocyanatotoluolsulfonsäure (hergestellt aus Toluylendiisocyanat, Isomerengemisch 2,4:2,6 = 80:20), entsprechend 115,5g Trockensubstanz bei Raumtemperatur innig vermischt.

Die Suspension wird 12 Stunden gerührt, wobei die Temperatur von 25° C auf 41° C ansteigt und der grösste Teil des Isocyanats unter Reaktion in Lösung geht. Nach 4 Stunden Rühren bei 70–76° C ist ein klares viskoses NCO-Präpolymer entstanden. Nach Zusatz von 85g Tris-chloräthylphosphat beträgt die Viskosität bei Raumtemperatur 65 000 cP. 89g des Produktes enthalten 0,02 Val NCO und 0,043 Val $SO_3H$.

II: Es wird wie unter I. Verfahren, jedoch unter Verwendung von 500g des dort beschriebenen Polyäthers, 165g (entsprechend 127g Trockensubstanz) des Uretdions der Diisocyanatotoluolsulfonsäure (Molverhältnis 1:2) und 66,5 Trischloräthylphosphat. Viskosität bei Raumtemperatur: 40 000 cP. 58g des Produktes enthalten 0,04 Val NCO und 0,04 Val $SO_3H$.

III: 132g (0,05 Mol) eines Adipinsäure-Diäthylenglykol-Polyesters mit endständigen OH-Gruppen werden mit 100g (0,3 Mol) toluolfeuchtem

Uretdion der Diisocyanatotoluolsulfonsäure, entsprechend 76g Trockensubstanz bei 60° C vermischt. Innerhalb von 12 Stunden wird das Gemisch unter Rühren langsam bis 95° C erwärmt, wobei ein zähviskoses estermodifiziertes Diisocyanat gebildet wird.

Beispiel 1:

89g I und 6,8g des Bis-glycidyläthers von Bisphenol A werden bei 30° C in einer silikonisierten Blechschale sehr rasch innig vermischt, wobei die Viskosität stark ansteigt. Nach 5 Minuten ist ein klares vernetztes Elastomer entstanden, das zunächst noch eine gewisse Plastizität aufweist. Nach 2 Stunden ist die Oberfläche trocken und das Produkt nicht mehr eindrückbar.

Beispiel 2:

89g I und 2,9g 1,2-Butenoxid werden vermischt. Nach 24 Stunden werden der viskosen Masse 0,5g Triäthylamin zugesetzt. Man erhält ein spachtelbares Produkt, dass z.B. als Fugenvergussmasse oder Dichtungsmasse eingesetzt werden kann. Im Verlauf einiger Wochen wird eine sehr schwach vernetzte elastische, jedoch noch plastisch eindrückbare Masse erhalten.

Beispiel 3:

89g I und 4,7g 3-Äthyl-3-hydroxymethyloxetan werden vermischt. Innerhalb von 24 Stunden nimmt die Viskosität sehr stark zu, die Masse bleibt jedoch plastisch. Nachheizen bei 50–100° C führt zu einem sehr weichen, klebrigen, plastisch verformbaren Elastomer.

Beispiel 4:

89g I und 40,8g einer 50-proz. Lösung des Bisglycidyläthers von Bis-phenol A in Tris-chloräthylphosphat werden bei Raumtemperatur vermischt. Im Gegensatz zu Beispiel 1 ist das Gemisch nach 15 Minuten noch fliessend. Eine Stunde später ist ein vernetztes Elastomer entstanden.

Beispiel 5:

Man verfärhrt wie in Beispiel 4, jedoch unter Verwendung von 27,2g der 50-proz. Epoxidlösung. Das Elastomer ist gegenüber dem nach Beispiel 4 erhaltenen wesentlich härter und stärker vernetzt.

Beispiel 6:

58g II und 6,8g des Bis-glycidyläthers von Bisphenol A werden bei Raumtemperatur vermischt. Nach 10 Minuten liegt noch ein fliessfähiges Gemisch vor; nach 30 Minuten ist ein Elastomer entstanden, das zunächst noch eine gewisse Plastizität aufweist. Nach 6 Stunden ist das Produkt nicht mehr deformierbar.

Eine Probe des Elastomeren wird 3 Monate unter Wasser gehalten. Geringe Anteile lösen sich in Wasser; das Elastomer bleibt nahezu unverändert. Die Quellung ist gering, Abbau konnte nicht beobachtet werden.

Beispiel 7:

Beispiel 3 wird wiederholt jedoch unter Verwendung von 58g II anstelle von I. Es wird ein sehr weiches, kaum klebriges vernetztes Elastomer erhalten.

Beispiel 8:

Es wird gemäss Beispiel 4 verfahren, jedoch unter Verwendung von 58g II anstelle von I. Nach 1 Stunde ist das Gemisch noch fliessfähig. Nach 24 Stunden ist ein sehr weiches klares Elastomer entstanden.

Beispiel 9:

30g III werden bei 90° C mit einem Gemisch aus 3g des Bis-glycidyläthers von Bisphenol A und 2g Epichlorhydrin verrührt. Innerhalb einer Minute entsteht ein hartes vernetztes Elastomer.

Beispiel 10:

30g III werden bei 80° C mit 3,6g Epichlorhydrin verrührt. Innerhalb von 48 Stunden entsteht eine plastische Masse, die als Kitt und Dichtungsmasse verwendet werden kann.

Beispiel 11:

Komponente A: 100g (0,05Mol) eines auf Propylenglykol gestarteten linearen Polyäthers vom Molgewicht 2000, der 80% Propylenoxid und endständig 20% Äthylenoxid enthält, werden mit 11,6g (0,1Mol) 3-Hydroxymethyl-3-äthyl-oxetan gemischt und als Katalysator 2g Dabco 33 LV zugesetzt.

Komponente B: 25,4g (0,1Mol) Uretdion der Diisocyanatotoluolsulfonsäure (hergestellt aus Toluylendiisocyanat, Isomerengemisch 2,4:2,6 = 80:20), 8,7g (0,05Mol) Toluylendiisocyanat und 4g Toluol werden zu einer Paste vermischt.

Die auf 60° erwärmte Komponente A wird mit Komponente B innig vermischt. In dem flüssigen Gemisch geht die Isocyanatosulfonsäure zunehmend in Lösung. Nach 15 Minuten fliesst das Gemisch nicht mehr. Nach einigen Stunden bei Raumtemperatur ist ein schwach trübes, völlig klebfreies Elastomer entstanden.

Die Aushärtung lässt sich stark beschleunigen, wenn das Gemisch bei 100° nachgeheizt wird.

Um ein völlig transparentes Elastomer zu erhalten ist es zweckmässig, die Isocyanatosulfonsäure vor der Umsetzung auf eine Teilchengrösse von max. 100μm zu mahlen und eine geringe Menge (3–10g) Triäthylphosphat der Komponente B zuzusetzen.

Verwendung eines Polyäthers mit höherem Gehalt an Äthylenoxid führt ebenfalls zu einer Beschleunigung der Reaktion.

Beispiel 12:

Es wird wie in Beispiel 11 verfahren, jedoch unter Verwendung von 7,2g (0,1Mol) Glycid anstelle des Oxetans. Das erhaltene Elastomer entspricht dem gemäss Beispiel 11 erhaltenen.

Beispiel 13:

Komponente A: wie Beispiel 11, jedoch 0,2g Zinndioctoat als Katalysator anstelle von Dabco 33bV.

Komponente B: wie Beispiel 11.

Die beiden Komponenten werden bei Raumtemperatur innig vermischt. Die Temperatur steigt auf 380° C. Nach 60 Minuten fliesst das Gemisch nicht mehr. Das erhaltene Elastomer ist etwas weicher als das gemäss Beispiel 11 erhaltene und geringfügig klebrig.

Beispiel 14:

Komponente B gemäss Beispiel 11 wird zunächst mit dem in Beispiel 11, Komponente A beschriebenen Polyäther innig vermischt, wobei unter schwacher Erwärmung eine weisse Paste

entsteht. Diese wird mit 11,6g 3-Hydroximethyl-3-äthyloxetan und 2g Dimethylbenzylamin vermischt. Das Gemisch wird 30 Minuten bei 160° C ausgeheizt. Man erhält ein transparentes klebfreies Elastomer.

Beispiel 15:

Komponente A: 184,5g (0,3Mol) eines linearen Polyäthylenglykol-polyäthers vom Molgewicht 615 werden mit 29g (0,25Mol) 3-Hydroximethyl-3-äthyloxetan gemischt.

Komponente B: 63,5g (0,25Mol) Uretdion der Diisocyanatotoluolsulfonsäure, 52,2g (0,3Mol) Toluylendiisocyanat und 20g Toluol werden vermischt, wobei eine Suspension entsteht.

Komponente A wird auf 40° C erwärmt und mit Komponente B vermischt. Die Temperatur steigt rasch auf 85° C und es entsteht eine klare Mischung. 8 Minuten nach Vereinigung der Komponenten ist die Polyaddition so weit fortgeschritten, dass die Mischung hochviskos geworden ist. Nach 15 Minuten ist ein vernetztes Polyurethan entstanden. Das gebildete Duromere ist hart, zäh und klar durchsichtig.

Wasserlagerung bewirkt reversible Erweichung, jedoch tritt nur geringfügige Quellung und kein hydrolytischer Abbau ein.

Beispiel 16:

Komponente A: wie in Beispiel 15.

Komponente B: wie in Beispiel 15, jedoch nur 34,8g (0,02Mol) Toluylendiisocyanat.

Komponente A wird auf 60° C erwärmt und rasch mit Komponente B vermischt. Die Temperatur steigt rasch auf 100° C an, wobei die Isocyanatosulfonsäure in Lösung geht. 3 Minuten nach Vereinigung der Komponenten ist die Mischung fest geworden. Das gebildete Duromere ist weicher und etwas elastischer als das gemäss Beispiel 15 erhaltene.

Beispiel 17:

Komponente A: 60,2g (0,1Mol) eines linearen Polyäthers vom Molgewicht 602, der zu 50% Propylenoxid und zu 50% Äthylenoxid als Baukomponenten enthält, werden mit 23,2g (0,2Mol) 3-Hydroximethyl-3-thyl-oxetan gemischt.

Komponente B: 50,8g (0,2Mol) Uretdion der Diisocyanatotoluolsulfonsäure, 17,4g (0,1Mol) Toluylendiisocyanat und 18g Toluol werden zu einer Paste vermischt.

Die beiden Komponenten werden bei 50° C vermischt. Nach 2 Minuten beginnt die Verfestigung der Masse. Es wird ein sehr hartes, jedoch nicht sprödes, farbloses, nur schwach trübes Duromeres erhalten.

Beispiel 18:

Komponente A: 227g (0,45Mol) eines linearen Polyäthylenglykolpolyäthers vom Molekulargewicht 615

29g (0,25Mol) 3 Hydroximethyl-3-äthyl-oxetan

10g Mono-propoxi-trimethylolpropan

5g Zinn-dioxtoat

1g eines Polyphenylsiloxan-Stabilisators gemäss DT-OS-2 232 525

2g Wasser

Komponente B: 63,5g (0,25Mol) Uretdion der Diisocyanatotoluolsulfonsäure

85,5g (0,49Mol) Toluylendiisocyanat

20g Toluol

Komponente A wird auf 50° C erwärmt und rasch mit Komponente B vermischt. Unter raschem Temperaturanstieg auf 117° C erfolgt Aufschäumen der Reaktionsmischung. Es wird ein elastischer feinporiger Schaumstoff erhalten.

## Patentansprüche

1. Verfahren zur Herstellung von Arylsulfonsäurealkylester-Gruppen aufweisenden Polyurethanen, dadurch gekennzeichnet, dass aromatische Isocyanatosulfonsäuren, welche gegebenenfalls Polyehter- und/oder Polyestereinheiten enthalten, gegebenenfalls im Gemisch mit bis zu 50 Gew.-%, bezogen auf gesamte Isocyanatkomponente, an üblichen Polyisocyanaten, bei 0–190° C mit Oxiranen und/oder Oxetanen bzw. Polyoxiranen und/oder Polyoxetane umgesetzt werden, wobei das Äquivalentverhältnis der NCO-Gruppen zu den $SO_3H$-Gruppen 0,1:1 bis 1,99:1 und das Äquivalentverhältnis zwischen Epoxid- (bzw. Oxetan-) Gruppen und $SO_3H$-Gruppen 0,2:1 bis 5:1 beträgt, mit der Massgabe, dass bei einem Äquivalentverhältnis zwischen NCO-Gruppen und $SO_3H$-Gruppen oberhalb von 1:1 Zerewitinoff-aktive Verbindungen, vorzugsweise Polyether- und/oder Polyesterpolyole, in einer zum Isocyanatüberschuss mindestens äquivalenten Menge mitverwendet werden.

2. Verfahren gemäss Anspruch 1, dadurch gekennzeichnet, dass das Äquivalentverhältnis von NCO-Gruppen zu $SO_3H$-Gruppen 0,2:1 bis 1:1 und das Äquivalentverhältnis von Epoxid-Gruppen zu $SO_3H$-Gruppen 0,5:1 bis 2:1 betragen.

## Claims

1. Process for the preparation of polyurethanes containing arylsulphonic acid alkyl ester groups, characterised in that aromatic isocyanatosulphonic acids, which optionally contain polyether and/or polyester units and are optionally in admixture with up to 50% by weight, based on the total isocyanate component, of conventional polyisocyanates, are reacted with oxiranes and/or oxetanes, or polyoxiranes and/or polyoxetanes, at 0–190° C, the equivalent ratio of NCO groups to $SO_3H$ groups being 0.1:1 to 1.99:1 and the equivalent ration of epoxide (or oxetane) groups to $SO_3H$ groups being 0.2:1 to 5:1, with the proviso that in the case of an equivalent ratio of NCO groups to $SO_3H$ groups of more than 1:1 Zerewitinoff-active compounds, preferably polyether and/or polyester polyols, are also used in an amount at least equivalent to the isocyanate excess.

2. Process according to Claim 1, characterised in that the equivalent ratio of NCO groups to $SO_3H$ groups is 0,2:1 to 1:1 and the equivalent ratio of epoxide groups to $SO_3H$ groups is 0,5:1 to 2:1.

**Revendications**

1. Procédé de préparation de polyuréthanes comportant des groupes d'esters alkyliques d'acides arylsulfoniques, caractérisé en ce que, à une température de 0 à 190° C, on fait réagir des acides isocyanato-sulfoniques aromatiques contenant éventuellement des motifs polyéther et/ou polyester, éventuellement en mélange avec des polyisocyanates habituels en une quantité allant jusqu'à 50% en poids, calculé sur tout le composant isocyanate, avec des oxirannes et/ou des oxétannes ou encore des polyoxirannes et/ou des polyoxétannes, le rapport d'équivalence entre les groups NCO et les groupes $SO_3H$ étant de 0,1:1 à 1,99:1, tandis que le rapport d'équivalence entre les groupes époxy (ou oxétanne) et les groupes $SO_3H$ est de 0,2:1 à 5:1, avec cette réserve qu'en présence d'un rapport d'équivalence supérieur à 1:1 entre les groupes NCO et les groupes $SO_3H$, on utilise conjointement des composés actifs de Zerewitinoff, de préférence, des polyéther-polyols et/ou des polyester-polyols, en une quantité équivalant au moins à l'excès d'isocyanate.

2. Procédé suivant la revendication 1, caractérisé en ce que le rapport d'équivalence entre les groupes NCO et les groupes $SO_3H$ est de 0,2:1 à 1:1, tandis que le rapport d'équivalence entre les groupes époxy et les groupes $SO_3H$ est de 0,5:1 à 2:1.